# EUROPEAN PATENT APPLICATION

(11) **EP 4 801 181 A1**
(43) Date of publication of application: **02.09.2026**
(21) Application number: 24893295.6
(22) Date of filing: 11.11.2024
(51) Int. Cl.: H04W 74/0833

(54) **COMMUNICATION METHOD AND APPARATUS**

(30) Priority: 22.11.2023 CN 202311581101
(71) Applicant: Huawei Technologies Co., Ltd., Shenzhen, Guangdong 518129 (CN)
(72) Inventor: CHEN, Ying, Shenzhen, Guangdong 518129 (CN); ZHAO, Feiran, Shenzhen, Guangdong 518129 (CN); TIE, Xiaolei, Shenzhen, Guangdong 518129 (CN)
(74) Representative: Pfenning, Meinig & Partner mbB
(86) International application number: PCT/CN2024/131430
(87) International publication number: WO 2025/108137

(57) **Abstract**

A communication method and apparatus are provided. The method includes: A second apparatus sends a first signal on a first resource within a first coverage range, and sends a system information block on a second resource within the first coverage range. Then, the second apparatus may receive a random access sequence on a third resource. There is an association relationship between the second resource and the first resource; and/or there is an association relationship between the third resource and the first resource. In this way, after receiving the first signal, a first apparatus may determine the second resource and/or the third resource based on the first resource, and the second apparatus does not need to indicate a location of the second resource and/or a location of the third resource by using signaling. In this way, signaling overheads can be reduced, transmission resources can be saved, and power consumption of the second apparatus can be reduced.

## Description

### CROSS-REFERENCE TO RELATED APPLICATIONS

This application claims priority to Chinese Patent Application No. 202311581101.8, filed with the China National Intellectual Property Administration on November 22, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In comparison with a conventional terrestrial network (for example, a 4th generation (4th generation, 4G) mobile communication system or a 5th generation (5th generation, 5G) mobile communication system), a non-terrestrial network (non-terrestrial network, NTN) has features such as a wider coverage range, a higher speed, and lower costs. Especially in areas in which a terrestrial network cannot be directly deployed, such as oceans, deserts, and airspace, the non-terrestrial network can be used as a supplement or extension of the terrestrial network, to implement wide-area seamless coverage, and effectively address an issue of internet access in areas with insufficient communication infrastructure.

As a typical example of the NTN, satellite communication has features such as a long communication distance, wide coverage range, and flexible networking, and plays an irreplaceable role in fields such as space communication, aeronautical communication, military communication, emergency disaster relief communication, and high-speed mobility. Introduction of the satellite communication into conventional communication systems can not only provide seamless coverage for terminal equipment, but also avoid impact of natural disasters and ensure reliability of the communication systems.

In a communication system like the NTN, how to reduce power consumption of a communication apparatus needs to be further studied.

### SUMMARY

This application provides a communication method and apparatus, to reduce power consumption of a communication apparatus.

**According to a first aspect**, an embodiment of this application provides a communication method. The method may be applied to a second apparatus. The second apparatus may be an access network device or a module (for example, a circuit, a chip, a chip system, or a processor) in the access network device, or may be a logical node, a logical module, or software that can implement all or a part of functions of the access network device. The method may include: The second apparatus may send a first signal on a first resource within a first coverage range, and may send a system information block on a second resource within the first coverage range. Then, the second apparatus may receive a random access sequence on a third resource. There is an association relationship between the second resource and the first resource; and/or there is an association relationship between the third resource and the first resource.

According to the method, there is the association relationship between the second resource and the first resource; and/or there is the association relationship between the third resource and the first resource. In this way, after receiving the first signal, a first apparatus may determine the second resource and/or the third resource based on the first resource, and the second apparatus does not need to indicate a location of the second resource and/or a location of the third resource by using signaling. In this way, signaling overheads can be reduced, transmission resources can be saved, and power consumption of the second apparatus can be reduced.

In a possible design, if a quantity of apparatuses in a connected state is 0 within the first coverage range, the second apparatus may send the first signal on the first resource within the first coverage range. According to this design, with the range in which the quantity of apparatuses (for example, terminals) in the connected state is 0, the second apparatus may send the first signal, so that the first apparatus that receives the first signal may determine the second resource and/or the third resource based on the first resource, and the second apparatus does not need to indicate the location of the second resource and/or the location of the third resource by using signaling. In this way, signaling overheads can be reduced, transmission resources can be saved, and power consumption of the second apparatus can be reduced.

In a possible design, the system information block indicates only at least one of the following: a first timing advance, where the first timing advance is a timing advance used by all apparatuses within the first coverage range; or a location of the second apparatus. Currently, when the second apparatus is a satellite, in addition to a common TA, the system information block may further include location information of the satellite and speed information of the satellite, or include orbit parameter information of the satellite. According to this design, the system information block needs to indicate only the first TA and/or the location of the second apparatus. In this way, signaling overheads can be reduced, transmission resources can be saved, and power consumption of the second apparatus can be reduced.

In a possible design, there is a first correspondence between the first signal and M random access resources, M is a positive integer, and the third resource belongs to the M random access resources. In this way, the second apparatus may implicitly indicate the M random access resources by using the first signal, and the first apparatus may quickly and accurately determine the M random access resources based on the first signal, and select, from the M random access resources, the third resource used for sending the random access sequence.

In a possible design, an interval between two adjacent random access resources in the M random access resources is a first interval. In this way, the first apparatus may quickly and accurately determine the M random access resources based on the first signal and the first interval.

In a possible design, an interval between start time of an N^{th} random access resource in the M random access resources and start time of the first resource is a first time interval, or an interval between the start time of the N^{th} random access resource and end time of the first resource is a second time interval, N is a positive integer, and N is less than or equal to M. According to this design, the first apparatus can quickly and accurately determine the N^{th} random access resource in the M random access resources, to quickly and accurately determine the M random access resources.

In a possible design, the first signal may correspond to a type of information in the system information block. In this way, the second apparatus may implicitly indicate the type of the information in the system information block by using the first signal, and the first apparatus may quickly and accurately determine the type of the information in the system information block based on the first signal.

In a possible design, after receiving the random access sequence on the third resource, the second apparatus may send indication information, where the indication information indicates that the second apparatus provides a service for the first apparatus after first duration. The first apparatus may be an apparatus that sends the random access sequence. Currently, the access network device usually concentrates resources in a service-intensive area. Therefore, after receiving the random access sequence, the second apparatus may need to take a period of time to schedule a beam and/or the resource to the first coverage range. According to this design, the second apparatus may indicate, in a timely manner by using the indication information, that the second apparatus provides the service for the first apparatus after the first duration.

In a possible design, if the third resource belongs to a first resource set, a response priority of the second apparatus to the first apparatus is a first priority; or if the third resource does not belong to the first resource set, the response priority of the second apparatus to the first apparatus is a second priority. The first priority is higher than the second priority, the first apparatus is the apparatus that sends the random access sequence, and a resource in the first resource set indicates that a to-be-transmitted service in the first apparatus meets at least one of the following conditions: A priority of the service is higher than a priority threshold; or a delay of the service needs to be less than a delay threshold. According to this design, the third resource is related to the to-be-transmitted service in the first apparatus. When the priority of the service is higher than the priority threshold, and/or the delay of the service needs to be less than the delay threshold, the second apparatus has a higher response priority to the first apparatus, so that communication between the first apparatus and the second apparatus can be quickly restored.

In a possible design, the first signal includes a PSS and/or an SSS. According to this design, content of the first signal can be simplified. In this way, signaling overheads are reduced, transmission resources are saved, and power consumption of the second apparatus is reduced.

In a possible design, an interval between start time of the second resource and the start time of the first resource is a third time interval, or an interval between the start time of the second resource and the end time of the first resource is a fourth time interval; and/or an interval between start time of the third resource and the start time of the first resource is a fifth time interval, or an interval between the start time of the third resource and the end time of the first resource is a sixth time interval. This design provides a possible manner of the association relationship between the second resource and the first resource, and/or provides a possible manner of the association relationship between the third resource and the first resource. This is flexible and easy to implement.

**According to a second aspect**, an embodiment of this application provides a communication method. The method may be applied to a first apparatus. The first apparatus may be a terminal or a module (for example, a circuit, a chip, a chip system, or a processor) in the terminal, or may be a logical node, a logical module, or software that can implement all or a part of functions of the terminal. The method may include: The first apparatus may receive a first signal on a first resource, and may receive a system information block on a second resource. Then, the first apparatus may send a random access sequence on a third resource. There is an association relationship between the second resource and the first resource; and/or there is an association relationship between the third resource and the first resource.

In a possible design, the first signal is received by the first apparatus within a first coverage range when a quantity of apparatuses in a connected state is 0 within the first coverage range.

In a possible design, the system information block indicates only at least one of the following: a first timing advance, where the first timing advance is a timing advance used by all apparatuses within the first coverage range; or a location of a second apparatus, where the second apparatus is an apparatus that sends the first signal.

In a possible design, there is a first correspondence between the first signal and M random access resources, M is a positive integer, and the third resource belongs to the M random access resources.

In a possible design, an interval between two adjacent random access resources in the M random access resources is a first interval.

In a possible design, an interval between start time of an N^{th} random access resource in the M random access resources and start time of the first resource may be a first time interval, or an interval between the start time of the N^{th} random access resource and end time of the first resource is a second time interval. N is a positive integer, and N is less than or equal to M.

In a possible design, the first signal may correspond to a type of information in the system information block.

In a possible design, after sending the random access sequence on the third resource, the first apparatus may receive indication information, where the indication information indicates that the second apparatus provides a service for the first apparatus after first duration. The second apparatus may be the apparatus that sends the first signal.

In a possible design, the first apparatus may be in a power-saving state in second duration after receiving of the indication information. The second duration is related to the first duration.

In a possible design, if the third resource belongs to a first resource set, a response priority of the second apparatus to the first apparatus is a first priority; or if the third resource does not belong to the first resource set, the response priority of the second apparatus to the first apparatus is a second priority. The first priority is higher than the second priority, the second apparatus is the apparatus that sends the first signal, and a resource in the first resource set indicates that a to-be-transmitted service in the first apparatus meets at least one of the following conditions: A priority of the service is higher than a priority threshold; or a delay of the service needs to be less than a delay threshold.

In a possible design, the first signal includes a PSS and/or an SSS.

In a possible design, an interval between start time of the second resource and the start time of the first resource may be a third time interval, or an interval between the start time of the second resource and the end time of the first resource may be a fourth time interval; and/or an interval between start time of the third resource and the start time of the first resource may be a fifth time interval, or an interval between the start time of the third resource and the end time of the first resource may be a sixth time interval.

**According to a third aspect**, this application provides a communication apparatus. The communication apparatus may be the second apparatus in the first aspect. The second apparatus may be an access network device or a module (for example, a circuit, a chip, a chip system, or a processor) in the access network device, or may be a logical node, a logical module, or software that can implement all or a part of functions of the access network device. The communication apparatus has a function of implementing the first aspect. For example, the communication apparatus includes a corresponding module, unit, or means for performing an operation in the first aspect. The module, the unit, or the means may be implemented by using software, may be implemented by using hardware, or may be implemented by using hardware executing corresponding software.

In a possible design, the communication apparatus includes a processing unit. Optionally, the communication apparatus further includes an interface unit. The interface unit may be configured to send and receive a signal, to implement communication between the communication apparatus and another apparatus. The processing unit may be configured to perform some internal operations of the communication apparatus. Functions performed by the processing unit and the interface unit may correspond to the operation in the first aspect.

In a possible design, the communication apparatus includes a processor, and the processor may be configured to be coupled to a memory. The memory may store a computer program or instructions necessary for implementing the function in the first aspect. The processor may execute the computer program or the instructions stored in the memory. When the computer program or the instructions are executed, the communication apparatus is caused to implement the method according to any one of the possible designs of the first aspect.

In a possible design, the communication apparatus includes a processor and a memory. The memory may store a computer program or instructions necessary for implementing the function in the first aspect. The processor may execute the computer program or the instructions stored in the memory. When the computer program or the instructions are executed, the communication apparatus is caused to implement the method according to any one of the possible designs of the first aspect.

In a possible design, the communication apparatus includes a processor and an interface circuit. The processor is configured to: communicate with another apparatus through the interface circuit, and perform the method according to any one of the possible designs of the first aspect.

**According to a fourth aspect**, this application provides a communication apparatus. The communication apparatus may be the first apparatus in the second aspect. The first apparatus may be a terminal or a module (for example, a circuit, a chip, a chip system, or a processor) in the terminal, or may be a logical node, a logical module, or software that can implement all or a part of functions of the terminal. The communication apparatus has a function of implementing the second aspect. For example, the communication apparatus includes a corresponding module, unit, or means for performing an operation in the second aspect. The module, the unit, or the means may be implemented by using software, may be implemented by using hardware, or may be implemented by using hardware executing corresponding software.

In a possible design, the communication apparatus includes a processing unit. Optionally, the communication apparatus further includes an interface unit. The interface unit may be configured to send and receive a signal, to implement communication between the communication apparatus and another apparatus. The processing unit may be configured to perform some internal operations of the communication apparatus. Functions performed by the processing unit and the interface unit may correspond to the operation in the second aspect.

In a possible design, the communication apparatus includes a processor, and the processor may be configured to be coupled to a memory. The memory may store a computer program or instructions necessary for implementing the function in the second aspect. The processor may execute the computer program or the instructions stored in the memory. When the computer program or the instructions are executed, the communication apparatus is caused to implement the method according to any one of the possible designs of the second aspect.

In a possible design, the communication apparatus includes a processor and a memory. The memory may store a computer program or instructions necessary for implementing the function in the second aspect. The processor may execute the computer program or the instructions stored in the memory. When the computer program or the instructions are executed, the communication apparatus is caused to implement the method according to any one of the possible designs of the second aspect.

In a possible design, the communication apparatus includes a processor and an interface circuit. The processor is configured to: communicate with another apparatus through the interface circuit, and perform the method according to any one of the possible designs of the second aspect.

It may be understood that, in the third aspect or the fourth aspect, the processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. In addition, there may be one or more processors, and there may be one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

**According to a fifth aspect**, this application provides a communication system. The communication system may include the communication apparatus according to the third aspect and the communication apparatus according to the fourth aspect. For example, the communication system includes a terminal and an access network device (for example, a satellite). The terminal is configured to perform the communication method provided in the second aspect, and the access network device is configured to perform the communication method provided in the first aspect.

**According to a sixth aspect**, this application provides a computer-readable storage medium. The computer-readable storage medium stores a computer program or instructions. When the computer program or the instructions are executed, the method according to any one of the possible designs of the first aspect or the second aspect is implemented.

**According to a seventh aspect**, this application provides a computer program product. The computer program product includes computer program code. When the computer program code is run, the method according to any one of the possible designs of the first aspect or the second aspect is implemented.

**According to an eighth aspect**, this application provides a chip. The chip is configured to read a computer program stored in a memory, to perform the method according to any one of the possible designs of the first aspect or the second aspect.

For technical effects that can be achieved in any one of the second aspect to the eighth aspect, refer to descriptions of technical effects that can be achieved in any one of the possible designs of the first aspect. Repeated parts are not described again.

### BRIEF DESCRIPTION OF DRAWINGS

FIG. 1A to FIG. 1D are diagrams of architectures of several communication systems according to this application;
FIG. 2 is a diagram of an architecture of a synchronization signal and physical broadcast channel (physical broadcast channel, PBCH) block (synchronization signal and PBCH block, SSB) according to an embodiment of this application;
FIG. 3 is a schematic flowchart of a communication method according to an embodiment of this application;
FIG. 4 is a diagram of a structure of a communication apparatus according to an embodiment of this application; and
FIG. 5 is a diagram of a structure of another communication apparatus according to an embodiment of this application.

### DESCRIPTION OF EMBODIMENTS

The following describes the technical solutions in embodiments of this application with reference to the accompanying drawings in embodiments of this application. The technical solutions in embodiments of this application may be applied to various communication systems, for example, a 5G mobile communication system (for example, an NR system) and/or an NTN communication system in a future evolved communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

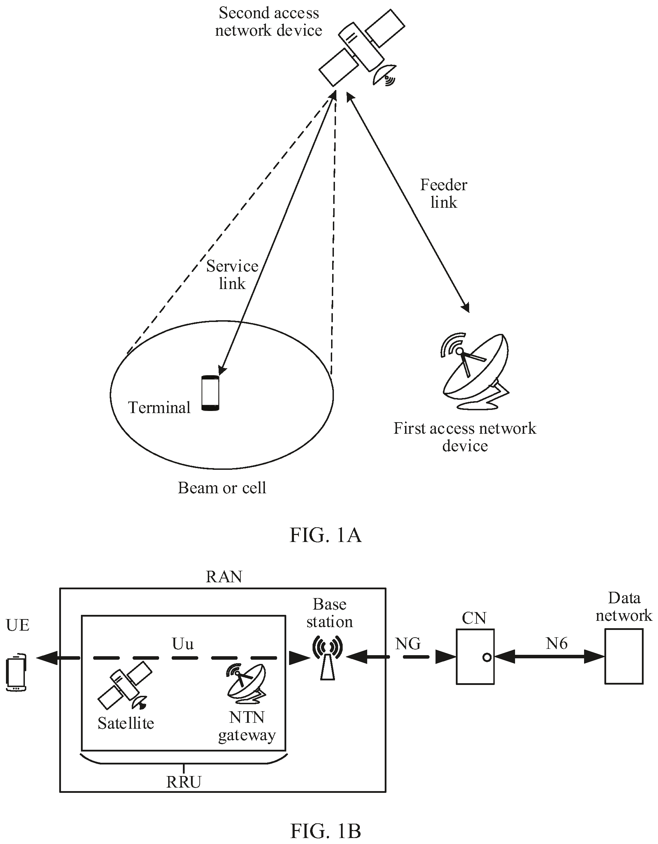

FIG. 1A shows an architecture of an NTN communication system to which an embodiment of this application is applicable. The communication system may include a terminal, a first access network device, and a second access network device. A communication link between the first access network device and the second access network device is a feedback link (also referred to as a feeder link), and a communication link between the second access network device and the terminal is a service link (service link).

The first access network device may be a gateway (gateway) (also referred to as a terrestrial station, an earth station, or a gateway station), or may be a base station.

The second access network device may be a satellite (also referred to as a satellite base station), a high-altitude platform station (high-altitude platform station, HAPS), or the like. The satellite may include at least one of the following: a geostationary earth orbit (geostationary earth orbit, GEO) satellite (also referred to as a geosynchronous orbit satellite), or a non-geostationary earth orbit (non-geostationary earth orbit, NGEO) satellite. The non-geostationary earth orbit satellite may include at least one of the following: a medium earth orbit (medium earth orbit, MEO) satellite or a low earth orbit (low earth orbit, LEO) satellite. This is not limited herein.

In embodiments of this application, communication modes of the second access network device may include a regenerative (regenerative) mode and a transparent (transparent) mode (which may also be referred to as a transparent transmission mode). When the communication mode of the second access network device is the regenerative mode, the second access network device may be used as a base station for wireless communication. For example, the second access network device may include a next generation NodeB (next generation NodeB, gNB), a distributed unit (distributed unit, DU), or the like. When the communication mode of the second access network device is the transparent mode, the second access network device may perform frequency conversion and forwarding on a signal.

It should be understood that FIG. 1B shows only one first access network device and one second access network device. In actual use, an architecture with a plurality of first access network devices and/or a plurality of second access network devices may be used as needed. Each second access network device may provide a service for one or more terminals, each second access network device may correspond to one or more first access network devices, and each first access network device may correspond to one or more second access network devices. This is not specifically limited in this application.

In this application, a terminal (terminal) may also be referred to as user equipment (user equipment, UE), an access terminal, a subscriber unit (subscriber unit), a subscriber station, a mobile station (mobile station, MS), a remote station, a remote terminal, a mobile device, a user terminal, terminal equipment (terminal equipment), a wireless communication device, a user agent, or a user apparatus.

The terminal may be a device that has a wireless communication function, for example, a handheld device or a vehicle-mounted device that has a wireless connection function. Currently, some examples of the terminal are: a mobile phone (mobile phone), a satellite mobile terminal, a cellular phone (cellular phone), a smartphone (smartphone), a tablet computer, a notebook computer, a palmtop computer, a mobile internet device (mobile internet device, MID), a wearable device (for example, a smartwatch, a smart band, a pedometer, or smart glasses), a device mounted on a vehicle (for example, a motor vehicle, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal (for example, a refrigerator, a television, an air conditioner, or an electricity meter) in a smart home (smart home), a smart robot, a robot arm, a cellular phone, a cordless phone, a session initiation protocol (session initiation protocol, SIP) phone, a wireless local loop (wireless local loop, WLL) station, a personal digital assistant (personal digital assistant, PDA), a handheld device or a compute device having a wireless communication function, or another processing device connected to a wireless modem, a flight device (for example, an intelligent robot, a hot air balloon, an uncrewed aerial vehicle, or an airplane), a terminal in a 5G network, a terminal in a future evolved public land mobile network (public land mobile network, PLMN), or the like. This is not limited in embodiments of this application. By way of example but not limitation, in this embodiment of this application, the terminal may alternatively be a mobile terminal (mobile terminal, MT) in an integrated access and backhaul (integrated access and backhaul, IAB) node. With respect to a parent node of the IAB node, the IAB node may be considered as a terminal. In this case, the IAB node plays a role of an MT.

A device form of the terminal is not limited in embodiments of this application. An apparatus configured to implement a function of the terminal may be a terminal, or may be an apparatus that can support the terminal in implementing the function, for example, a chip system. The apparatus may be mounted in the terminal or used in cooperation with the terminal. In embodiments of this application, the chip system may include a chip, or may include a chip and another discrete component.

In this application, an access network device is a device that provides a wireless communication function for the terminal, and the terminal may communicate with a core network device through the access network device. As a node in a radio access network, the access network device may also be referred to as a base station, a radio access network (radio access network, RAN) node (or device), or an access point (access point, AP). The communication system may include a plurality of access network devices. The plurality of access network devices may be nodes of a same type, or may be nodes of different types. In some scenarios, roles of the access network device and the terminal are relative. For example, a network element #A may be a helicopter or an uncrewed aerial vehicle, may be configured as a mobile base station, and may access the RAN through a network element #B. For terminals that access the RAN through the network element #A, the network element #A is a base station. However, for the network element #B, the network element #A is a terminal.

In a possible scenario, the access network device may be a base station (base station), a transmitting and receiving point (transmitting and receiving point, TRP), a transmitting point (transmitting point, TP), a base station in a future mobile communication system, a satellite, an IAB node, a mobile switching center, a high-altitude platform, or the like. The access network device may be a macro base station, a micro base station or an indoor base station, a relay node or a donor node, or a radio controller in a cloud RAN (cloud RAN, CRAN) scenario. The access network device may alternatively be a device that functions as a base station in device-to-device (device-to-device, D2D) communication, internet of vehicles communication, uncrewed aerial vehicle communication, or machine-to-machine communication. Optionally, the access network device may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, the plurality of access network devices cooperate to assist the terminal in implementing radio access, and different access network devices respectively implement a part of functions of the base station. For example, the access network device may be a central unit (central unit, CU), a DU, a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio equipment or a radio frequency unit, for example, included in a remote radio unit (remote radio unit, RRU), an active antenna unit (active antenna unit, AAU), or a remote radio head (remote radio head, RRH). It may be understood that the access network device may be a CU node, a DU node, or a device including the CU node and the DU node. In addition, the CU may be classified as an access network device in an access network RAN, or the CU may be classified as an access network device in a core network CN. This is not limited herein.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

A form of the access network device is not limited in embodiments of this application. An apparatus configured to implement a function of the access network device may be the access network device, or may be an apparatus that can support the access network device in implementing the function, for example, a chip system. The apparatus may be mounted in the access network device or used in cooperation with the access network device.

The access network device and the terminal may be at fixed locations, or may be movable. The access network device and the terminal may be deployed terrestrially, including an indoor device or an outdoor device, a handheld device, or a vehicle-mounted device; may be deployed on the water; or may be deployed on an airplane, a balloon, and an artificial satellite in the air. Application scenarios of the access network device and the terminal are not limited in embodiments of this application.

In this application, the core network device is a device in the core network that provides service support for the terminal. Currently, some examples of the core network device are an access and mobility management function (access and mobility management function, AMF) entity, a session management function (session management function, SMF) entity, a user plane function (user plane function, UPF) entity, and the like. This is not listed one by one herein. The AMF entity may be responsible for access management and mobility management of the terminal. The SMF entity may be responsible for session management, for example, user session establishment. The UPF entity may be a functional entity on a user plane, and is mainly responsible for connecting to an external network. It should be noted that, an entity in this application may also be referred to as a network element or a functional entity. For example, the AMF entity may also be referred to as an AMF network element or an AMF functional entity. For another example, the SMF entity may also be referred to as an SMF network element or an SMF functional entity.

A satellite communication system shown in this application may have a plurality of possible architectures, for example, any one of an architecture 1 to an architecture 3.

Architecture 1: FIG. 1B shows a satellite communication system in a transparent mode to which an embodiment of this application is applicable. As shown in FIG. 1B, a terminal may communicate with a terrestrial base station through an air interface (for example, a Uu interface), and a satellite and an NTN gateway may be considered as RRUs of the terrestrial base station, to implement transparent signal forwarding. The terrestrial base station may communicate with a core network through an NG interface. The satellite supports functions such as radio frequency filtering (radio frequency filtering) and frequency conversion and amplification (frequency conversion and amplification). That is, the satellite may serve as a layer 1 relay (L1 relay) to regenerate a physical layer signal.

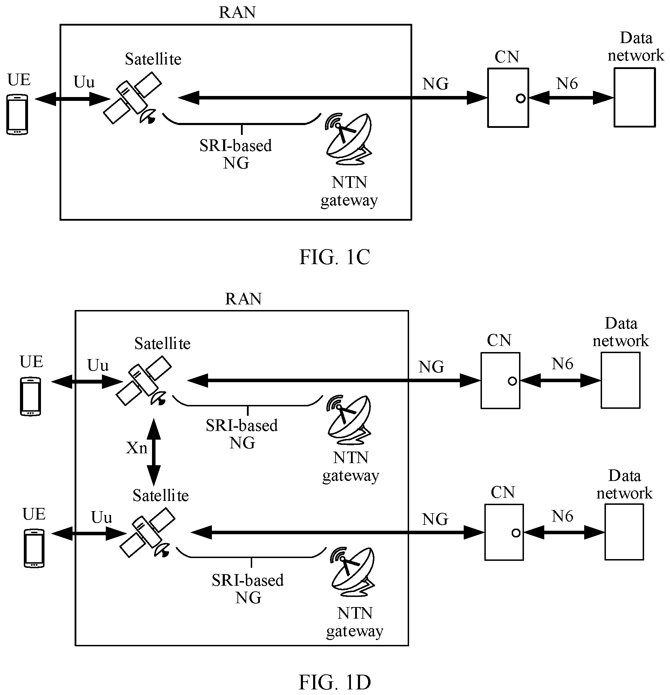

Architecture 2: FIG. 1C shows a satellite communication system in a regenerative mode to which an embodiment of this application is applicable. As shown in FIG. 1C, a satellite has a part or all of functions of an access network device, and may be referred to as a satellite base station. The satellite may provide a radio access service, and schedule a radio resource for terminal equipment that accesses a network through the satellite. A terminal may communicate with the satellite through an air interface (for example, a Uu interface), the satellite may communicate with an NTN gateway through an NG interface, and the NTN gateway may communicate with a core network through the NG interface. Optionally, there is no inter-satellite link (inter-satellite link, ISL) between satellites.

Architecture 3: FIG. 1D shows another satellite communication system in a regenerative mode to which an embodiment of this application is applicable. As shown in FIG. 1D, a satellite has a part or all of functions of an access network device, and may be referred to as a satellite base station. The satellite may provide a radio access service, and schedule a radio resource for terminal equipment that accesses a network through the satellite. A terminal may communicate with the satellite through an air interface (for example, a Uu interface), the satellite may communicate with an NTN gateway through an NG interface, and the NTN gateway may communicate with a core network through the NG interface. There is an ISL between satellites. For example, the ISL is a link on an Xn interface, and the satellites may communicate with each other through the Xn interface.

The communication system and a service scenario described in embodiments of this application are intended to describe the technical solutions in embodiments of this application more clearly, and do not constitute a limitation on the technical solutions provided in embodiments of this application. A person of ordinary skill in the art may learn that, with evolution of a network architecture and emergence of a new service scenario, the technical solutions provided in embodiments of this application are also applicable to similar technical problems.

The following first explains and describes related terms in embodiments of this application. It should be noted that these explanations are intended to make embodiments of this application easier to understand, but should not be construed as a limitation on the protection scope claimed in this application.

### (1) SSB

Currently, the SSB may include a synchronization signal and a PBCH. The synchronization signal may be used by a terminal to perform downlink synchronization and obtain an identity (identity, ID) of a cell. The downlink synchronization may include frequency synchronization and time synchronization. The PBCH may be used by the terminal to obtain information about a cell to be accessed.

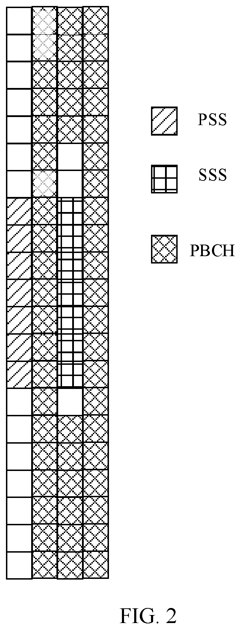

For example, as shown in FIG. 2, the SSB may include a primary synchronization signal (primary synchronization signal, PSS), a secondary synchronization signal (secondary synchronization signal, SSS), and the PBCH. Both the PSS and the SSS are synchronization signals. The PSS may be used for transmitting a cell identity, the SSS may be used for transmitting a cell group identity, and a plurality of physical cell identities (physical cell identities, PCIs) in a communication system are determined by both the cell identity and the cell group. Once the terminal successfully detects the PSS and the SSS, the terminal knows a PCI corresponding to the SSB. The PBCH may be used for transmitting a master information block (master information block, MIB). The MIB may include a system frame number, a subcarrier spacing for initial access, and the like, and the terminal may access the cell based on the MIB and the like.

### (2) Radio resource control (radio resource control, RRC) connected state

The RRC connected state, which is referred to as a connected state for short, is an RRC connected state of a terminal in a communication system. When the terminal is in the connected state, an RRC connection is established between the terminal and an access network device, and the terminal can communicate with the access network device based on the RRC connection.

### (3) Time unit

In this application, a time domain resource may be represented in time units. For example, the time unit may be but is not limited to a subframe (subframe), a slot (slot), a symbol, a second (s), a millisecond (ms), or the like. The symbol may be a time domain symbol (for example, an orthogonal frequency division multiplexing (orthogonal frequency division multiplexing, OFDM) symbol) or the like. The following uses an example in which the time domain resource is represented in subframes for description.

### (4) Beam position

In this application, the beam position may be a coverage range or coverage area of a beam. For example, 16 beams are configured for one satellite, and a coverage range of each beam may be one beam position.
(5) In this application, a system information block may alternatively be replaced with a broadcast message.
(6) In this application, "sending information to ... (terminal)" may be understood as that a destination end of the information is the terminal, and may include directly or indirectly sending information to the terminal. "Receiving information from ... (terminal)" may be understood as that a source end of the information is the terminal, and may include directly or indirectly receiving information from the terminal. Necessary processing, for example, a format change, may be performed on the information between the source end and the destination end for information sending. However, the destination end can understand valid information from the source end. A similar expression in this application may be understood similarly, and details are not described herein again.

Currently, in a communication system like an NTN, how to reduce power consumption of a communication apparatus needs to be further studied. For example, in satellite communication, a satellite mainly relies on solar energy for power supply, and therefore power available to the satellite is limited. A coverage range of the satellite is wide, and there may be an area in which there is no terminal in a connected state within the coverage range of the satellite. The satellite also periodically sends a message (for example, an SSB and a system information block) in such an area. As a result, transmission resources are wasted, and unnecessary power consumption is caused. How to reduce power consumption of the satellite in the satellite communication needs to be further studied.

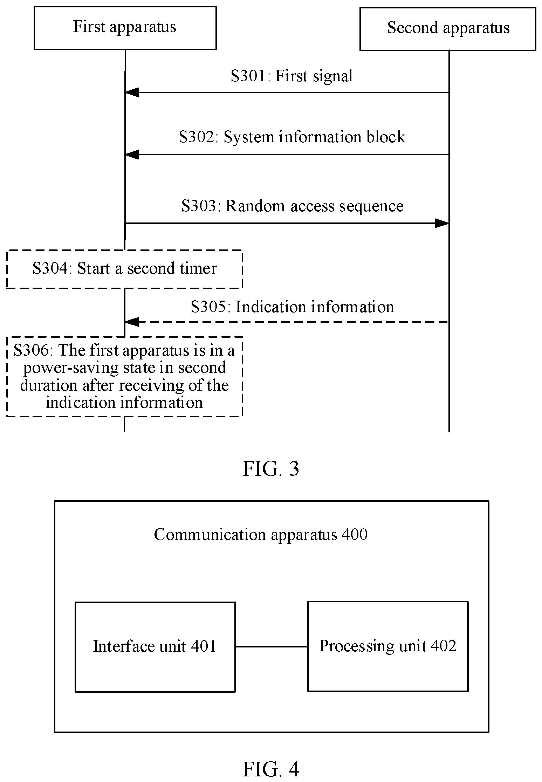

In view of this, embodiments of this application provide a communication method. FIG. 3 is a schematic flowchart corresponding to a communication method according to an embodiment of this application. In FIG. 3, the method is illustrated by using an example in which a first apparatus and a second apparatus function as entities for performing interaction. However, the entities for performing interaction are not limited in this application. For example, the first apparatus may be a terminal, or may be a module used in the terminal, for example, a circuit, a chip, a chip system, or a processor, or may be a logical node, a logical module, or software that can implement all or a part of functions of the terminal; and the second apparatus may be an access network device (for example, a satellite), or may be a module used in the access network device (for example, the satellite), for example, a circuit, a chip, a chip system, or a processor, or may be a logical node, a logical module, or software that can implement all or a part of functions of the access network device (for example, the satellite). As shown in FIG. 3, the method includes the following steps.

**S301:** The second apparatus sends a first signal on a first resource within a first coverage range, and correspondingly, the first apparatus receives the first signal on the first resource.

The first apparatus may be located within the first coverage range. The first coverage range may be a part or all of a coverage range of the second apparatus. For example, the second apparatus includes one cell, and the first coverage range may be a coverage range of the cell. For another example, the coverage range of the second apparatus includes a plurality of beam positions. The first coverage range may be one of the plurality of beam positions.

Optionally, the first signal is a synchronization signal. The synchronization signal may be a simplified synchronization signal. For example, the first signal may include a PSS and/or an SSS. The first signal may be generated based on a parameter. For example, the first signal includes an SSS 1, and the SSS 1 is generated based on a parameter 1. For another example, the first signal includes an SSS 2, and the SSS 2 is generated based on a parameter 2. For still another example, the first signal includes a PSS 1, and the PSS 1 is generated based on a parameter 3. For specific content of the PSS and the SSS, refer to the descriptions of the PSS and the SSS in the term explanation part. Details are not described herein again. In this way, the first signal needs to include only the PSS and/or the SSS, and does not need to include a PBCH. Therefore, in comparison with sending an SSB including the PSS, the SSS, and the PBCH, sending the first signal can reduce signaling overheads, save transmission resources, and reduce power consumption of the second apparatus.

The second apparatus may periodically send the first signal within the first coverage range. A sending periodicity may be preset, for example, specified in a protocol, or may be determined by the second apparatus, or may be determined by another apparatus (for example, a core network device) and then notified to the second apparatus.

In some possible manners, if a quantity of apparatuses (for example, terminals) in a connected state is 0 within the first coverage range, the second apparatus may send the first signal on the first resource within the first coverage range. In other words, if a quantity of apparatuses having an RRC connection to the second apparatus is 0 within the first coverage range, the second apparatus may send the first signal on the first resource within the first coverage range. For example, the coverage range of the second apparatus includes a coverage range of a cell 1. If a quantity of terminals in the connected state is 0 within the coverage range of the cell 1, the first coverage range may be the coverage range of the cell 1, and the second apparatus sends the first signal on the first resource within the coverage range of the cell 1. For another example, the coverage range of the second apparatus includes the plurality of beam positions. A beam position X is any one of the plurality of beam positions. If a quantity of terminals in the connected state is 0 within the beam position X, the first coverage range is the beam position X, and the second apparatus may send the first signal on the first resource within the beam position X. It should be understood that the plurality of beam positions may include at least two beam positions, and a quantity of terminals in the connected state is 0 within the at least two beam positions. If the second apparatus sends the first signal on the first resource within the at least two beam positions, the first coverage range may include the at least two beam positions. If the at least two beam positions include a beam position A and a beam position B, and a resource that carries the first signal within the beam position A is different from a resource that carries the first signal within the beam position B, the beam position A may be the first coverage range, and the beam position B may be a second coverage range. For operations of the second apparatus and the first apparatus for the second coverage range, refer to operations of the second apparatus and the first apparatus for the first coverage range. In this manner, if the quantity of apparatuses (for example, terminals) in the connected state is 0 within the first coverage range, the second apparatus may send the first signal on the first resource within the first coverage range, and the first signal may be a simplified synchronization signal. In this way, signaling overheads can be reduced, transmission resources can be saved, and power consumption of the second apparatus can be reduced.

**S302:** The second apparatus sends a system information block on a second resource within the first coverage range, and correspondingly, the first apparatus receives the system information block on the second resource.

The first apparatus may determine the second resource in a plurality of manners, for example, a manner a1 or a manner a2.

**Manner a1**: There is an association relationship between the second resource and the first resource. In this way, the first apparatus may determine the second resource based on the association relationship between the second resource and the first resource.

Optionally, there is an association relationship between a time domain position of the second resource and a time domain position of the first resource. In some examples, an interval between start time of the second resource and start time of the first resource is a third time interval. For example, if the start time of the first resource is a 3^{rd} subframe, and the third time interval is five subframes, the start time of the second resource is an 8^{th} subframe. The third time interval may be preset, for example, specified in a protocol, or may be determined by the first apparatus or the second apparatus, or may be determined by another apparatus (for example, a core network device). In some other examples, an interval between the start time of the second resource and end time of the first resource is a fourth time interval. For example, if the end time of the first resource is a 4^{th} subframe, and the fourth time interval is four subframes, the start time of the second resource is an 8^{th} subframe. The fourth time interval may be preset, for example, specified in a protocol, or may be determined by the first apparatus or the second apparatus, or may be determined by another apparatus (for example, a core network device).

Currently, a resource for sending the system information block is usually indicated by using signaling. For example, a PBCH in an SSB may indicate the resource for sending the system information block. In the manner a1, after receiving the first signal on the first resource, the first apparatus may determine, based on the association relationship between the second resource and the first resource, the second resource used for receiving the system information block, and the second apparatus does not need to indicate a location of the second resource by using signaling. In this way, signaling overheads can be reduced, transmission resources can be saved, and power consumption of the second apparatus can be reduced.

**Manner a2:** The second resource is indicated by the first signal. For example, the first signal is an SSB, and a PBCH in the SSB may indicate the second resource. Specific content of the second resource indicated by the PBCH is not limited in this application. In this way, the first apparatus may determine the second resource based on the first signal.

In some possible manners, the system information block may indicate only at least one of the following 1 and 2:
1. First timing advance (timing advance, TA): The system information block may explicitly indicate the first TA. For example, the system information block includes the first TA. Alternatively, the system information block may implicitly indicate the first TA. For example, the system information block may include information that corresponds to the first TA. The first TA may be a timing advance used by all apparatuses (for example, terminals) within the first coverage range. In this way, all the apparatuses within the first coverage range may compensate for uplink signals by using the first TA, to implement uplink synchronization. For example, the first TA is a common TA.
2. Location of the second apparatus: The system information block may explicitly indicate the location of the second apparatus. For example, the system information block includes a longitude and a latitude of the location of the second apparatus. For another example, the system information block includes spatial coordinates of the location of the second apparatus. Alternatively, the system information block may implicitly indicate the location of the second apparatus. For example, the system information block may include information that corresponds to the location of the second apparatus. The first apparatus may determine, based only on the location of the second apparatus and a location of the first apparatus, a TA used by the first apparatus. For example, the TA used by the first apparatus is 2d/c, where d is a distance between the first apparatus and the second apparatus, and may be determined based on the location of the first apparatus and the location of the second apparatus, and c is the speed of light.

Currently, when the second apparatus is the satellite, in addition to the common TA, the system information block may further include location information of the satellite and speed information of the satellite, or include orbit parameter information of the satellite. In the foregoing manner, the system information block needs to indicate only the first TA and/or the location of the second apparatus. In this way, signaling overheads can be reduced, transmission resources can be saved, and power consumption of the second apparatus can be reduced.

In some implementations, the first signal corresponds to a type of information in the system information block. In this way, the second apparatus may implicitly indicate the type of the information in the system information block by using the first signal, and the first apparatus may quickly and accurately determine the type of the information in the system information block based on the first signal.

For example, if the first signal is a synchronization signal 1, and the synchronization signal 1 may indicate that the type of the information in the system information block includes an ephemeris of the second apparatus, the first apparatus may determine, based on the first signal, that the system information block includes the ephemeris of the second apparatus.

For another example, if the first signal is a synchronization signal 2, and the synchronization signal 2 may indicate that the type of the information in the system information block includes only the common TA, the first apparatus may determine, based on the first signal, that the system information block includes only the common TA. When the second apparatus covers the first coverage range by using a narrow beam (where for example, a width of the beam is less than a beam width threshold), the first signal may be the synchronization signal 2 in this example. In this case, TAs of the apparatuses (for example, the terminals) within the first coverage range do not differ greatly, and the common TA may be used to compensate for the uplink signals. A TA error may be covered by a CP. A manner in which the CP covers the TA error is not limited in this application.

For still another example, if the first signal is a synchronization signal 3, and the synchronization signal 3 may indicate that the type of the information in the system information block does not include an ephemeris of the second apparatus, the first apparatus may determine, based on the first signal, that the system information block does not include the ephemeris of the second apparatus.

The first signal may correspond to the type of the information in the system information block in a plurality of manners, for example, a manner b1 or a manner b2.

**Manner b1:** A type of the synchronization signal in the first signal corresponds to the type of the information in the system information block. For example, if the type of the synchronization signal in the first signal includes the PSS, the type of the information in the system information block includes a type 1. For another example, if the type of the synchronization signal in the first signal includes the SSS, the type of the information in the system information block includes a type 2. Optionally, types of information in system information blocks corresponding to different types of the synchronization signal may be completely the same, or may be partially the same, or may be completely different. For example, the type 1 and the type 2 may be completely the same, or may be partially the same, or may be completely different.

**Manner b2:** A generation parameter of the synchronization signal in the first signal corresponds to the type of the information in the system information block. For example, if the first signal includes the SSS 1, and the SSS 1 is generated based on the parameter 1, that is, a generation parameter of the SSS 1 is the parameter 1, the type of the information in the system information block includes a type 3. For another example, if the first signal includes the SSS 2, and the SSS 2 is generated based on the parameter 2, that is, a generation parameter of the SSS 2 is the parameter 2, the type of the information in the system information block includes a type 4. Optionally, types of information in system information blocks corresponding to different generation parameters may be completely the same, or may be partially the same, or may be completely different. For example, the type 3 and the type 4 may be completely the same, or may be partially the same, or may be completely different.

**S303:** The first apparatus sends a random access sequence on a third resource, and correspondingly, the second apparatus receives the random access sequence on the third resource.

The first apparatus may determine the third resource in a plurality of manners, for example, a manner c1 or a manner c2.

**Manner c1**: There is an association relationship between the third resource and the first resource. In this way, the first apparatus may determine the third resource based on the association relationship between the third resource and the first resource.

Optionally, there is an association relationship between a time domain position of the third resource and the time domain position of the first resource. In some examples, an interval between start time of the third resource and the start time of the first resource may be a fifth time interval. For example, if the start time of the first resource is a 3^{rd} subframe, and the fifth time interval is 10 subframes, the start time of the third resource is a 13^{th} subframe. The fifth time interval may be preset, for example, specified in a protocol, or may be determined by the first apparatus or the second apparatus, or may be determined by another apparatus (for example, a core network device). In some other examples, an interval between start time of the third resource and the end time of the first resource may be a sixth time interval. For example, if the end time of the first resource is a 4^{th} subframe, and the sixth time interval is nine subframes, the start time of the third resource is a 13^{th} subframe. The sixth time interval may be preset, for example, specified in a protocol, or may be determined by the first apparatus or the second apparatus, or may be determined by another apparatus (for example, a core network device).

In some possible manners, there is a first correspondence between the first signal and M random access resources, M is a positive integer, and the third resource belongs to the M random access resources. In this way, the second apparatus may implicitly indicate the M random access resources by using the first signal, and the first apparatus may quickly and accurately determine the M random access resources based on the first signal, and select, from the M random access resources, the third resource used for sending the random access sequence.

For example, an interval between two adjacent random access resources in the M random access resources is a first interval. In other words, a periodicity of the M random access resources is the first interval. In this way, the first apparatus may quickly and accurately determine the M random access resources based on the first signal and the first interval. In some implementations, at least one of a value of M and the first interval is related to a quantity of apparatuses (for example, terminals) within the first coverage range. In some examples, if the quantity of terminals within the first coverage range is less than or equal to a first quantity threshold (for example, 0), for example, the first coverage range is an uninhabited area, the first interval is an interval 1; or if the quantity of terminals within the first coverage range is greater than a second quantity threshold, the first interval is an interval 2. The second quantity threshold is greater than or equal to the first quantity threshold, and the interval 1 is greater than the interval 2. In some other examples, if the quantity of terminals within the first coverage range is less than or equal to a first quantity threshold (for example, 0), for example, the first coverage range is an uninhabited area, the value of M is a value 1 (for example, 1); or if the quantity of terminals within the first coverage range is greater than a second quantity threshold, the value of M is a value 2 (for example, 3). The second quantity threshold is greater than or equal to the first quantity threshold, and the value 2 is greater than the value 1.

Optionally, there is an association relationship between an N^{th} random access resource in the M random access resources and the first resource, N is a positive integer, and N is less than or equal to M. For example, M is 3, and N may be 1, 2, or 3. In some examples, an interval between start time of the N^{th} random access resource and the start time of the first resource is a first time interval. For example, if the start time of the first resource is a 3^{rd} subframe, and the first time interval is 10 subframes, the start time of the N^{th} random access resource is a 13^{th} subframe. The first time interval may be preset, for example, specified in a protocol, or may be determined by the first apparatus or the second apparatus, or may be determined by another apparatus (for example, a core network device). In some other examples, an interval between start time of the N^{th} random access resource and the end time of the first resource may be a second time interval. For example, if the end time of the first resource is a 4^{th} subframe, and the second time interval is nine subframes, the start time of the N^{th} random access resource is a 13^{th} subframe. The second time interval may be preset, for example, specified in a protocol, or may be determined by the first apparatus or the second apparatus, or may be determined by another apparatus (for example, a core network device).

After determining the N^{th} random access resource in the M random access resources, the first apparatus may determine the M random access resources based on the first interval between the two adjacent random access resources in the M random access resources. For example, if the start time of the N^{th} random access resource is a 13^{th} subframe, N is 1, M is 3, and the first interval is five subframes, the first apparatus may determine that time domain positions of the M random access resources include the 13^{th} subframe, an 18^{th} subframe, and a 23^{rd} subframe. For another example, if the start time of the N^{th} random access resource is a 13^{th} subframe, N is 2, M is 3, and the first interval is five subframes, the first apparatus may determine that time domain positions of the M random access resources include an 8^{th} subframe, the 13^{th} subframe, and an 18^{th} subframe.

As described above, there is the first correspondence between the first signal and the M random access resources. The first signal may correspond to the M random access resources in a plurality of manners, for example, a manner d1 or a manner d2.

**Manner d1:** The type of the synchronization signal in the first signal corresponds to the M random access resources. In some examples, if the type of the synchronization signal in the first signal includes the PSS, the M random access resources include resources 1. For example, the resources 1 include three resources, that is, M is 3. In some other examples, if the type of the synchronization signal in the first signal includes the SSS, the M random access resources include a resource 2. For example, the resource 2 includes one resource, that is, M is 1. Optionally, M random access resources corresponding to different types of the synchronization signal may be completely the same, or may be partially the same, or may be completely different. For example, the resources 1 and the resource 2 may be completely the same, or may be partially the same, or may be completely different.

**Manner d2:** The generation parameter of the synchronization signal in the first signal corresponds to the M random access resources. In some examples, if the first signal includes the SSS 1, and the SSS 1 is generated based on the parameter 1, that is, the generation parameter of the SSS 1 is the parameter 1, the M random access resources include resources 3. For example, the resources 3 include three resources, that is, M is 3. In some other examples, if the first signal includes the SSS 2, and the SSS 2 is generated based on the parameter 2, that is, the generation parameter of the SSS 2 is the parameter 2, the M random access resources include a resource 4. For example, the resource 4 includes one resource, that is, M is 1. Optionally, M random access resources corresponding to different generation parameters may be completely the same, or may be partially the same, or may be completely different. For example, the resources 3 and the resource 4 may be completely the same, or may be partially the same, or may be completely different.

Currently, a resource for sending the random access sequence is usually indicated by using signaling. For example, the system information block may indicate the resource for sending the random access sequence. In the manner c1, after receiving the first signal on the first resource, the first apparatus may determine, based on the association relationship between the third resource and the first resource, the third resource used for sending the random access sequence, and the second apparatus does not need to indicate a location of the third resource by using signaling. In this way, signaling overheads can be reduced, transmission resources can be saved, and power consumption of the second apparatus can be reduced.

**Manner c2:** The system information block may indicate at least one random access resource, and the third resource belongs to the at least one random access resource. Specific content of the at least one random access resource indicated by the system information block is not limited in this application. In this way, the first apparatus may determine the third resource based on the system information block.

It should be understood that at least one of the manner c1 or the manner c2 may be combined with at least one of the foregoing manner a1 or manner a2. When the manner c1 is combined with the manner a1, there is the association relationship between the second resource and the first resource, and there is the association relationship between the third resource and the first resource. Therefore, there is also an association relationship between the third resource and the second resource. Optionally, there is an association relationship between the time domain position of the third resource and the time domain position of the second resource. In some examples, an interval between the start time of the third resource and the start time of the second resource may be a seventh time interval. For example, if the start time of the second resource is an 8^{th} subframe, and the seventh time interval is five subframes, the start time of the third resource is a 13^{th} subframe. The seventh time interval may be preset, for example, specified in a protocol, or may be determined by the first apparatus or the second apparatus, or may be determined by another apparatus (for example, a core network device). In some other examples, an interval between the start time of the third resource and the end time of the second resource may be an eighth time interval. For example, if the end time of the second resource is a 9^{th} subframe, and the eighth time interval is four subframes, the start time of the third resource is a 13^{th} subframe. The eighth time interval may be preset, for example, specified in a protocol, or may be determined by the first apparatus or the second apparatus, or may be determined by another apparatus (for example, a core network device).

In some possible manners, after S303, the method shown in FIG. 3 further includes S304.

**S304:** The first apparatus starts a second timer.

After the first apparatus starts the second timer, there may be a plurality of operating manners of the second timer. Examples are described below. In some examples, after the first apparatus starts the second timer, the second timer may start timing from 0 ms, and timing duration of the second timer gradually increases. When the timing duration of the second timer reaches duration of the second timer, the second timer expires. In some other examples, after the first apparatus starts the second timer, the second timer starts timing from duration of the second timer, and timing duration of the second timer gradually decreases. When the timing duration of the second timer reaches 0 ms, the second timer expires. When using the second timer, the first apparatus needs to determine the duration of the second timer. The duration of the second timer may be preset, for example, specified in a protocol, or may be determined by the first apparatus, or may be determined by another apparatus (for example, the second apparatus) and then notified to the first apparatus.

During running of the second timer, if the first apparatus receives an SSB from the second apparatus, the first apparatus may initiate a random access procedure based on the SSB. Specific content of the random access procedure is not limited in this application. If the first apparatus does not receive the SSB from the second apparatus before the second timer expires, the first apparatus may resend the random access sequence, and start the second timer again until receiving the SSB from the second apparatus.

In some possible manners, after S303, the method shown in FIG. 3 further includes S305.

**S305:** The second apparatus sends indication information, and correspondingly, the first apparatus receives the indication information.

The indication information may indicate that the second apparatus provides a service for the first apparatus after first duration. In other words, the indication information may indicate that the second apparatus delays providing the service for the first apparatus. In some examples, the indication information may indicate, by using content in the indication information, that the second apparatus provides the service for the first apparatus after the first duration. For example, when a value of the indication information is a first value (for example, 0), it indicates that the second apparatus provides the service for the first apparatus after the first duration. In this way, the first apparatus may determine, based on the value of the indication information, that the second apparatus provides the service for the first apparatus after the first duration. For another example, the indication information may be a message 1 that indicates the second apparatus provides the service for the first apparatus after the first duration. In this way, after receiving the message 1, the first apparatus may determine that the second apparatus provides the service for the first apparatus after the first duration.

In addition, the first duration may be preset, for example, specified in a protocol. Alternatively, the first duration may be determined by the second apparatus and then notified to the first apparatus. For example, the first duration is included in the indication information.

Currently, the access network device usually concentrates resources in a service-intensive area. Therefore, after receiving the random access sequence, the second apparatus may need to take a period of time to schedule a beam and/or the resource to the first coverage range. According to the method, the second apparatus may indicate, in a timely manner by using the indication information, that the second apparatus provides the service for the first apparatus after the first duration.

Optionally, after S305, the method shown in FIG. 3 further includes the following step.

**S306:** The first apparatus is in a power-saving state (which may also be referred to as a low power consumption state) in second duration after receiving of the indication information. In other words, the indication information may be used to trigger the first apparatus to be in the power-saving state in the second duration after receiving of the indication information.

The second duration is related to the first duration. For example, the second duration is the same as the first duration. For another example, the second duration is a sum of the first duration and an offset value. The offset value may be a positive number, or may be a negative number. The offset value may be preset, for example, specified in a protocol. Alternatively, the offset value may be determined by another apparatus (for example, the second apparatus) and then notified to the first apparatus. For example, the offset value is included in the indication information. Alternatively, the offset value may be determined by the first apparatus.

Optionally, the second duration may be indicated by using a first timer. For example, after receiving the indication information, the first apparatus may start the first timer, that is, the indication information may be used to trigger the first apparatus to start the first timer. Duration of the first timer is the second duration. For a manner in which the first apparatus starts the first timer, refer to the manner in which the first apparatus starts the second timer in S304, and only the second timer is replaced with the first timer. Details are not described herein again.

The indication information may indicate that the second apparatus provides the service for the first apparatus after the first duration. Therefore, after receiving the indication information, the first apparatus may determine that the second apparatus does not provide the service for the first apparatus in the period of time, so that the first apparatus may be in the power-saving state in the period of time, thereby reducing power consumption of the first apparatus. After the second duration following the reception of the indication information, for example, after the first timer expires, the first apparatus may monitor the SSB from the second apparatus, and initiate the random access procedure based on the SSB.

In some implementations, S304 to S306 may be combined. For example, after S303, the first apparatus may start the second timer (that is, S304 is performed). During the running of the second timer, if the first apparatus receives the indication information from the second apparatus (that is, S305 is performed), the first apparatus is in the power-saving state in the second duration after receiving of the indication information (that is, S306 is performed). If the first apparatus does not receive the indication information from the second apparatus before the second timer expires, the first apparatus may resend the random access sequence, and start the second timer again until receiving the indication information from the second apparatus.

In some possible manners, if the third resource belongs to a first resource set, a response priority of the second apparatus to the first apparatus is a first priority. If the third resource does not belong to the first resource set, the response priority of the second apparatus to the first apparatus is a second priority. The first priority is higher than the second priority. Each resource in the first resource set may indicate that a to-be-transmitted service in the first apparatus meets at least one of the following condition 1 and condition 2. In this way, if the to-be-transmitted service in the first apparatus meets at least one of the condition 1 and the condition 2, the first apparatus may select the third resource from the first resource set. In other words, if the to-be-transmitted service in the first apparatus meets the at least one of the condition 1 and the condition 2, the third resource belongs to the first resource set, that is, if the third resource belongs to the first resource set, the to-be-transmitted service in the first apparatus meets the at least one of the condition 1 and the condition 2. The following describes the condition 1 and the condition 2.

**Condition 1:** A priority of the service is higher than a priority threshold. For example, the to-be-transmitted service in the first apparatus includes a service 1. If a priority of the service 1 is higher than the priority threshold, the first apparatus may determine that the condition 1 is met. The priority threshold may be preset, for example, specified in a protocol, or may be determined by the first apparatus, or may be determined by another apparatus (for example, the second apparatus) and then notified to the first apparatus. Optionally, "greater than" in the condition 1 may be replaced with "greater than or equal to".

**Condition 2:** A delay of the service needs to be less than a delay threshold. For example, the to-be-transmitted service in the first apparatus includes a service 1. If a delay of the service 1 needs to be less than 8 ms, and the delay threshold is 10 ms, the first apparatus may determine that the condition 2 is met. The delay threshold may be preset, for example, specified in a protocol, or may be determined by the first apparatus, or may be determined by another apparatus (for example, the second apparatus) and then notified to the first apparatus. Optionally, "less than" in the condition 2 may be replaced with "less than or equal to".

A higher response priority indicates that the second apparatus may provide the service for the first apparatus more quickly. For example, a terminal 1 sends a random access sequence to the second apparatus by using a resource 1 in the first resource set. A terminal 2 sends a random access sequence to the second apparatus by using a resource 2 that is not in the first resource set. A response priority of the second apparatus to the terminal 1 is higher than a response priority of the second apparatus to the terminal 2. For example, the second apparatus schedules an uplink resource 1 for the terminal 1, and the second apparatus schedules an uplink resource 2 for the terminal 2. Start time of the uplink resource 1 is earlier than start time of the uplink resource 2. For another example, the second apparatus sends a downlink signal (for example, a random access response) to the terminal 1 by using a downlink resource 1, and the second apparatus sends a downlink signal (for example, a random access response) to the terminal 2 by using a downlink resource 2. Start time of the downlink resource 1 is earlier than start time of the downlink resource 2. Therefore, if the third resource belongs to the first resource set, after sending the random access sequence, the first apparatus may not enter the power-saving state, and may quickly resume communication with the second apparatus. For example, the first apparatus may resume communication with the second apparatus after duration 1. The duration 1 is greater than or equal to a round-trip transmission delay between the first apparatus and the second apparatus.

Based on a same technical concept as the foregoing method embodiments, an embodiment of this application provides a corresponding communication apparatus, and the communication apparatus may be configured to perform functions of related steps in the foregoing method embodiments. The functions may be implemented by hardware, may be implemented by software, or may be implemented by hardware by executing corresponding software. The hardware or the software includes one or more modules corresponding to the foregoing functions. The communication apparatus may be a terminal, or may be a module (for example, a circuit or a chip) in the terminal, or may be a logical node, a logical module, or software that can implement all or a part of functions of the terminal. Alternatively, the communication apparatus may be an access network device or a module (for example, a circuit or a chip) in the access network device, or may be a logical node, a logical module, or software that can implement all or a part of functions of the access network device.

In a possible implementation, a structure of the communication apparatus provided in an embodiment of this application is shown in FIG. 4, and the communication apparatus includes a processing unit 402. Optionally, the communication apparatus further includes an interface unit 401. Functions of the units in the communication apparatus 400 are described below.

The interface unit 401 is configured to input and/or output information. The input information may be replaced with received information, and the output information may be replaced with sent information. When outputting information, the interface unit 401 may output the information to another apparatus other than the communication apparatus 400, or may output the information to another unit in the communication apparatus 400. In some manners, the interface unit 401 may be implemented through at least one of a physical interface, a communication module, a communication interface, and an input/output interface. In some other manners, the interface unit 401 may be implemented through an interface circuit, for example, a mobile communication module. The mobile communication module may include one or more of at least one antenna, at least one filter, a switch, a power amplifier, a low noise amplifier (low noise amplifier, LNA), and the like.

The processing unit 402 may be configured to support the communication apparatus 400 in performing the processing actions in the foregoing method embodiments. The processing unit 402 may be implemented by using one or more processors. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

In another implementation, the communication apparatus 400 is used as the second apparatus in the embodiment of this application shown in FIG. 3. The following describes specific functions of the processing unit 402 in this implementation.

The processing unit 402 is configured to: send, through the interface unit 401, a first signal on a first resource within a first coverage range; send, through the interface unit 401, a system information block on a second resource within the first coverage range; and receive, through the interface unit 401, a random access sequence on a third resource, where there is an association relationship between the second resource and the first resource; and/or there is an association relationship between the third resource and the first resource.

In some possible manners, the processing unit 402 is specifically configured to: if a quantity of apparatuses in a connected state is 0 within the first coverage range, send, through the interface unit 401, the first signal on the first resource within the first coverage range.

Optionally, the processing unit 402 is further configured to: after receiving the random access sequence on the third resource, send indication information through the interface unit 401, where the indication information indicates that the communication apparatus 400 provides a service for a first apparatus after first duration, and the first apparatus is an apparatus that sends the random access sequence.

In another implementation, the communication apparatus 400 is used as the first apparatus in the embodiment of this application shown in FIG. 3. The following describes specific functions of the processing unit 402 in this implementation.

The processing unit 402 is configured to: receive, through the interface unit 401, a first signal on a first resource; receive, through the interface unit 401, a system information block on a second resource; and send, through the interface unit 401, a random access sequence on a third resource, where there is an association relationship between the second resource and the first resource; and/or there is an association relationship between the third resource and the first resource.

In some possible manners, the processing unit 402 is further configured to: after sending the random access sequence on the third resource, receive indication information through the interface unit 401, where the indication information indicates that a second apparatus provides a service for the communication apparatus 400 after first duration, and the second apparatus is an apparatus that sends the first signal.

Optionally, the processing unit 402 is further configured to cause the communication apparatus 400 to be in a power-saving state in second duration after receiving of the indication information, and the second duration is related to the first duration.

For more detailed descriptions about the processing unit 402 and the interface unit 401, directly refer to related descriptions in the method embodiment shown in figure. Details are not described herein again.

It should be noted that, in the foregoing embodiment of this application, division into the modules is an example, is merely logical function division, and may be other division during actual implementation. In addition, function units in embodiments of this application may be integrated into one processing unit, may exist alone physically, or two or more units may be integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technologies, or all or a part of the technical solutions may be implemented in the form of a software product. A computer software product is stored in a storage medium and includes several instructions for instructing a computer device (which may be a personal computer, a server, or a network device) or a processor (processor) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

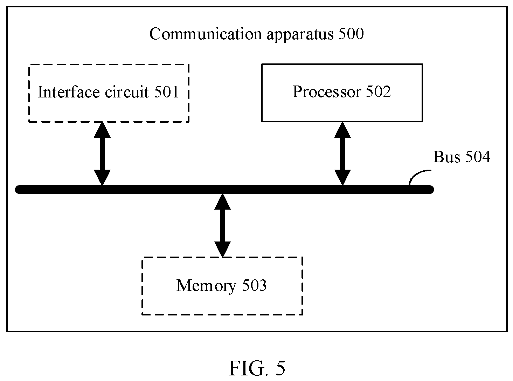

In a possible implementation, for a communication apparatus provided in an embodiment of this application, refer to FIG. 5. The communication apparatus 500 includes a processor 502. Optionally, the communication apparatus 500 further includes an interface circuit 501 and a memory 503. The interface circuit 501, the processor 502, and the memory 503 are coupled to each other.

Optionally, the interface circuit 501, the processor 502, and the memory 503 are coupled to each other through a bus 504. The bus 504 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used to represent the bus in FIG. 5, but this does not mean that there is only one bus or only one type of bus.

The interface circuit 501 is configured to input and/or output information. The input information may be replaced with received information, and the output information may be replaced with sent information. When outputting information, the interface circuit 501 may output the information to another apparatus other than the communication apparatus 500, or may output the information to another unit in the communication apparatus 500. For example, the interface circuit 501 may be implemented through at least one of a physical interface, a communication module, a communication interface, an input/output interface, and a mobile communication module. The mobile communication module may include one or more of at least one antenna, at least one filter, a switch, a power amplifier, an LNA, and the like.

The processor 502 may be configured to support the communication apparatus 500 in performing the processing actions in the foregoing method embodiments. When the communication apparatus 500 is configured to implement the foregoing method embodiments, the processor 502 may be further configured to implement functions of the foregoing processing unit 402. The processor 502 may be a CPU, or may be another general-purpose processor, a DSP, an ASIC, an FPGA or another programmable logic device, a transistor logic device, a hardware component, or any combination thereof. The general-purpose processor may be a microprocessor, or may be any conventional processor.

In another implementation, the communication apparatus 500 is used as the second apparatus in the embodiment of this application shown in FIG. 3. The following describes specific functions of the processor 502 in this implementation.

The processor 502 is configured to: send, through the interface circuit 501, a first signal on a first resource within a first coverage range; send, through the interface circuit 501, a system information block on a second resource within the first coverage range; and receive, through the interface circuit 501, a random access sequence on a third resource, where there is an association relationship between the second resource and the first resource; and/or there is an association relationship between the third resource and the first resource.

In another implementation, the communication apparatus 500 is used as the first apparatus in the embodiment of this application shown in FIG. 3. The following describes specific functions of the processor 502 in this implementation.

The processor 502 is configured to: receive, through the interface circuit 501, a first signal on a first resource; receive, through the interface circuit 501, a system information block on a second resource; and send, through the interface circuit 501, a random access sequence on a third resource, where there is an association relationship between the second resource and the first resource; and/or there is an association relationship between the third resource and the first resource.

For the specific functions of the processor 502, refer to the descriptions in the communication method provided in the foregoing embodiments and examples of this application, and the specific function descriptions of the communication apparatus 400 in the embodiment of this application shown in FIG. 4. Details are not described herein again.

The memory 503 is configured to store program instructions, data, and/or the like. Specifically, the program instructions may include program code, and the program code includes computer operation instructions. The memory 503 may include a RAM, and may further include a non-volatile memory (non-volatile memory), for example, at least one magnetic disk memory. The processor 502 executes the program instructions stored in the memory 503, and uses the data stored in the memory 503, to implement the foregoing functions, so as to implement the communication method provided in the foregoing embodiments of this application. The memory 503 may be integrated with the processor 502, or may be a memory outside the communication apparatus.

It may be understood that the memory 503 in FIG. 5 of this application may be a volatile memory or a non-volatile memory, or may include a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

Based on the foregoing embodiments, an embodiment of this application further provides a computer program product including computer-executable instructions. When the computer program product is run, the method provided in the foregoing embodiments is performed.

Based on the foregoing embodiments, an embodiment of this application further provides a computer-readable storage medium. The computer-readable storage medium stores a computer program. When the computer program is executed by a computer, the computer is caused to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in the form of an instruction or a data structure and can be accessed by the computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to devices in the foregoing embodiments. In a possible design, the chip system further includes a memory, and the memory is configured to store a program and data that are necessary for the computer apparatus. The chip system may include a chip, or may include a chip and another discrete component.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

This application is described with reference to the flowcharts and/or the block diagrams of the method, device (system), and computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In text descriptions of this application, a character "/" usually indicates an "or" relationship between the associated objects. In a formula of this application, the character "/" usually indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

It is clear that a person skilled in the art may make various modifications and variations to this application without departing from the scope of this application. In this way, this application is intended to cover these modifications and variations of this application provided that such modifications and variations fall within the scope of the claims of this application and equivalent technologies thereof.

## Claims

1. A communication method, comprising:
sending a first signal on a first resource within a first coverage range;
sending a system information block on a second resource within the first coverage range; and
receiving a random access sequence on a third resource, wherein
there is an association relationship between the second resource and the first resource; and/or there is an association relationship between the third resource and the first resource.

2. The method according to claim 1, wherein sending the first signal on the first resource within the first coverage range comprises:
if a quantity of apparatuses in a connected state is 0 within the first coverage range, sending the first signal on the first resource within the first coverage range.

3. The method according to claim 1 or 2, wherein the system information block indicates only at least one of the following:
a first timing advance, wherein the first timing advance is a timing advance used by all apparatuses within the first coverage range; or
a location of a second apparatus, wherein the second apparatus is an apparatus that sends the first signal.

4. The method according to any one of claims 1 to 3, wherein there is a first correspondence between the first signal and M random access resources, M is a positive integer, and the third resource belongs to the M random access resources.

5. The method according to claim 4, wherein an interval between two adjacent random access resources in the M random access resources is a first interval.

6. The method according to claim 4 or 5, wherein an interval between start time of an N^{th} random access resource in the M random access resources and start time of the first resource is a first time interval, or an interval between the start time of the N^{th} random access resource and end time of the first resource is a second time interval, N is a positive integer, and N is less than or equal to M.

7. The method according to any one of claims 1 to 6, wherein the first signal corresponds to a type of information in the system information block.

8. The method according to any one of claims 1 to 7, wherein after receiving the random access sequence on the third resource, the method further comprises:
sending indication information, wherein the indication information indicates that the second apparatus provides a service for a first apparatus after first duration, the second apparatus is the apparatus that sends the first signal, and the first apparatus is an apparatus that sends the random access sequence.

9. The method according to any one of claims 1 to 8, wherein if the third resource belongs to a first resource set, a response priority of the second apparatus to the first apparatus is a first priority; or if the third resource does not belong to the first resource set, the response priority of the second apparatus to the first apparatus is a second priority, wherein the first priority is higher than the second priority, the second apparatus is the apparatus that sends the first signal, the first apparatus is the apparatus that sends the random access sequence, and a resource in the first resource set indicates that a to-be-transmitted service in the first apparatus meets at least one of the following conditions: a priority of the service is higher than a priority threshold; or a delay of the service needs to be less than a delay threshold.

10. The method according to any one of claims 1 to 9, wherein the first signal comprises a primary synchronization signal PSS and/or a secondary synchronization signal SSS.

11. The method according to any one of claims 1 to 10, wherein an interval between start time of the second resource and the start time of the first resource is a third time interval, or an interval between the start time of the second resource and the end time of the first resource is a fourth time interval; and/or
an interval between start time of the third resource and the start time of the first resource is a fifth time interval, or an interval between the start time of the third resource and the end time of the first resource is a sixth time interval.

12. A communication method, comprising:
receiving a first signal on a first resource;
receiving a system information block on a second resource; and
sending a random access sequence on a third resource, wherein
there is an association relationship between the second resource and the first resource, and there is an association relationship between the third resource and the first resource.

13. The method according to claim 12, wherein the first signal is received within a first coverage range when a quantity of apparatuses in a connected state is 0 within the first coverage range.

14. The method according to claim 12 or 13, wherein the system information block indicates only at least one of the following:
a first timing advance, wherein the first timing advance is a timing advance used by all apparatuses within the first coverage range; or
a location of a second apparatus, wherein the second apparatus is an apparatus that sends the first signal.

15. The method according to any one of claims 12 to 14, wherein there is a first correspondence between the first signal and M random access resources, M is a positive integer, and the third resource belongs to the M random access resources.

16. The method according to claim 15, wherein an interval between two adjacent random access resources in the M random access resources is a first interval.

17. The method according to claim 16, wherein an interval between start time of an N^{th} random access resource in the M random access resources and start time of the first resource is a first time interval, or an interval between the start time of the N^{th} random access resource and end time of the first resource is a second time interval, N is a positive integer, and N is less than or equal to M.

18. The method according to any one of claims 12 to 17, wherein the first signal corresponds to a type of information in the system information block.

19. The method according to any one of claims 12 to 18, wherein after sending the random access sequence on the third resource, the method further comprises:
receiving indication information, wherein the indication information indicates that the second apparatus provides a service for a first apparatus after first duration, the second apparatus is the apparatus that sends the first signal, and the first apparatus is an apparatus that sends the random access sequence.

20. The method according to claim 19, further comprising:
the first apparatus is in a power-saving state in second duration after receiving of the indication information, and the second duration is related to the first duration.

21. The method according to any one of claims 12 to 20, wherein if the third resource belongs to a first resource set, a response priority of the second apparatus to the first apparatus is a first priority; or if the third resource does not belong to the first resource set, the response priority of the second apparatus to the first apparatus is a second priority, wherein the first priority is higher than the second priority, the second apparatus is the apparatus that sends the first signal, the first apparatus is the apparatus that sends the random access sequence, and a resource in the first resource set indicates that a to-be-transmitted service in the first apparatus meets at least one of the following conditions: a priority of the service is higher than a priority threshold; or a delay of the service needs to be less than a delay threshold.

22. The method according to any one of claims 12 to 21, wherein the first signal comprises a primary synchronization signal PSS and/or a secondary synchronization signal SSS.

23. The method according to any one of claims 12 to 22, wherein an interval between start time of the second resource and the start time of the first resource is a third time interval, or an interval between the start time of the second resource and the end time of the first resource is a fourth time interval; and/or
an interval between start time of the third resource and the start time of the first resource is a fifth time interval, or an interval between the start time of the third resource and the end time of the first resource is a sixth time interval.

24. A communication apparatus, comprising:
an interface unit, configured to receive and send information; and
a processing unit, configured to perform the method according to any one of claims 1 to 23 through the interface unit.

25. A communication apparatus, comprising a processor, wherein the processor is configured to perform the method according to any one of claims 1 to 23.

26. A communication system, comprising:
a first apparatus, configured to perform the method according to any one of claims 12 to 23; and
a second apparatus, configured to perform the method according to any one of claims 1 to 11.

27. A computer-readable storage medium, wherein the computer-readable storage medium stores a computer program or instructions, and when the computer program or the instructions are executed by a communication apparatus, the method according to any one of claims 1 to 23 is implemented.

28. A chip, wherein the chip is coupled to a memory, and the chip reads a computer program stored in the memory, to perform the method according to any one of claims 1 to 23.

29. A computer program product, wherein the computer program product comprises computer program code, and when the computer program code is run, the method according to any one of claims 1 to 23 is implemented.
